# EUROPÄISCHE PATENTSCHRIFT

(11) **EP 4 256 679 B1**
(45) Veröffentlichungstag und Bekanntmachung des Hinweises auf die Patenterteilung: **16.09.2026**
(21) Anmeldenummer: 21811246.4
(22) Anmeldetag: 09.11.2021
(51) Int. Cl.: H02K 5/20, H02K 9/19, H02K 21/24

(54) **ELEKTRISCHE AXIALFLUSSMASCHINE UND ACHSE MIT ELEKTRISCHEM ANTRIEB**
ELECTRIC AXIAL FLUX MACHINE, AND AXLE COMPRISING AN ELECTRIC DRIVE
MACHINE À FLUX AXIAL ÉLECTRIQUE ET ESSIEU COMPRENANT UN ENTRAÎNEMENT ÉLECTRIQUE

(30) Priorität: 07.12.2020 DE 102020132490
(43) Veröffentlichungstag der Anmeldung: 11.10.2023
(73) Patentinhaber: Schaeffler Technologies AG & Co. KG, 91074 Herzogenaurach (DE); Mercedes-Benz Group AG, 70372 Stuttgart (DE)
(72) Erfinder: REH, Vitali, 90449 Nürnberg (DE); LUTZ, Christian, 95473 Creußen (DE); HILLMAN, Tom, Oxford, OX143AF (GB); WOOLMER, Tim, AL38QQ Markyate (GB)
(74) Vertreter: Hofstetter, Schurack & Partner
(86) Internationale Anmeldenummer: PCT/DE2021/100890
(87) Internationale Veröffentlichungsnummer: WO 2022/122071

(56) Entgegenhaltungen:
- US-A1- 2003 189 388
- US-A1- 2008 100 166
- US-B2- 9 006 953

## Beschreibung

Die vorliegende Erfindung betrifft eine elektrische Axialflussmaschine, umfassend einen Stator, einen Rotor mit einer Rotorwelle und zumindest einem ersten dreh- und verschiebefest auf der Rotorwelle angeordneten, scheibenförmig ausgebildeten Rotorkörper, sowie eine Kühleinrichtung zur Kühlung der Axialflussmaschine. Ferner betrifft die Erfindung eine sogenannte elektrische Achse bzw. elektrisch angetriebene Achse mit integrierter elektrischer Axialflussmaschine.

Aus der DE 10 2014 222 121 A1 ist eine elektrische Axialflussmaschine bekannt, die einen Stator mit radial verlaufenden Nuten aufweist und der Stator weiterhin in radialer Richtung übereinander angeordnete Lagen eines spiralförmig verlaufenden bandförmigen Blechs aufweist. Der Stator weist dabei in seinem Inneren einen kanalartigen Hohlraum zum Führen von Kühlfluid zur Kühlung des Stators auf.

Darüber hinaus wird in der EP 2 396 871 B1 eine weitere Axialflussmaschine beschrieben, welche einen Stator mit einer Kühleinrichtung aufweist.

US 9 006 953 B2 offenbart einen Statoraufbau für eine elektrische Maschine mit axialem Fluss. Das hintere Eisen für jeden Siliziumstahl-Scheibenstator ist zu einer spezifischen Struktur mit zahnähnlichen Vorsprüngen geformt, um die Integration mit dem scheibenförmigen Statorsitz zu ermöglichen, während der scheibenförmige Statorsitz aus einem Material hergestellt ist, das zum Gießen oder Formen geeignet ist. Auf dem Scheibenstator ist eine Spule montiert, und durch die Integration des Stators, der Spule und des Statorsitzes wird eine Statorbaugruppe erreicht. Der Stator und der scheibenförmige Statorsitz der Statorbaugruppe werden unter Verwendung eines einteiligen Guss- oder einteiligen Formgebungsverfahrens hergestellt, so dass die Kontaktflächen des Stators und des Statorsitzes noch fester ineinander greifen können und folglich die von der Spule erzeugte Wärme schnell vom Scheibenstator auf den scheibenförmigen Statorsitz übertragen werden kann. Der Erfindung liegt die Aufgabe zugrunde eine Axialflussmaschine mit einer Kühleinrichtung bereitzustellen, welche im Hinblick auf Wärmeeinträge aufgrund von maximaler zulässiger Dauerlast weiter optimiert ist. Insbesondere sollen durch die Konstruktion der Kühleinrichtung andere Komponenten der Axialflussmaschine so wenig wie möglich negativ beeinflusst werden.

Die der Erfindung zugrundeliegende Aufgabe wird gelöst durch eine elektrische Axialflussmaschine mit den Merkmalen des Patentanspruchs 1 sowie durch eine elektrisch antreibbare Achse für ein Kraftfahrzeug mit den Merkmalen des Patentanspruchs 12.

Eine erfindungsgemäße Axialflussmaschine umfasst einen Stator, einen Rotor mit einer Rotorwelle und mit zumindest einem ersten dreh- und verschiebefest auf der Rotorwelle angeordneten, scheibenförmig ausgebildeten Rotorkörper, sowie eine Kühleinrichtung zur Kühlung der Axialflussmaschine. Erfindungsgemäß umfasst die Kühleinrichtung ein erstes Kühlkanalmodul zur Aufnahme eines Kühlmittels, wobei das Kühlkanalmodul als separates Bauteil, auf der dem Stator abgekehrten Seite, axial unmittelbar benachbart zu dem Rotorkörper angeordnet ist.

Hierdurch wird eine Axialflussmaschine mit einer Kühleinrichtung bereitgestellt, welche einfach herzustellen und in vorhandene Bauräume von Axialflussmaschinen eingebracht oder für entsprechende Bauräume in zu konstruierenden Axialflussmaschinen konzipiert werden kann.

Zunächst werden die einzelnen Elemente des beanspruchten Erfindungsgegenstandes erläutert und nachfolgend besonders bevorzugte Ausgestaltungen des Erfindungsgegenstandes beschrieben.

Der magnetische Fluss in einer elektrischen Axialflussmaschine (AFM), wie beispielsweise eine als Axialflussmaschine ausgebildete elektrische Antriebsmaschine eines Kraftfahrzeugs, ist im Luftspalt zwischen Stator und Rotor axial zu einer Rotationsrichtung des Rotors der Axialflussmaschine gerichtet. Es gibt unterschiedliche Typen von Axialflussmaschinen. Ein bekannter Typ ist eine sogenannte I-Anordnung, bei der der Rotor axial neben einem Stator oder zwischen zwei Statoren angeordnet ist. Ein anderer bekannter Typ ist eine sogenannte H-Anordnung, bei der zwei Rotoren auf gegenüberliegenden axialen Seiten eines Stators angeordnet sind.

Der Stator einer elektrischen Axialflussmaschine weist einen Statorkörper mit mehreren in Umfangsrichtung angeordneten Statorwicklungen auf. Der Statorkörper kann in Umfangsrichtung gesehen einteilig oder segmentiert ausgebildet sein. Der Statorkörper kann aus einem Statorblechpaket mit mehreren laminierten Elektroblechen gebildet sein. Alternativ kann der Statorkörper auch aus einem verpressten weichmagnetischen Material, wie dem sogenannten SMC-Material (Soft Magnetic Compound) gebildet sein.

Als Rotorwelle wird eine drehbar gelagerte Welle einer elektrischen Maschine bezeichnet, mit der der Rotor bzw. Rotorkörper drehfest gekoppelt ist.

Der Rotor einer elektrischen Axialflussmaschine kann zumindest in Teilen als geblechter Rotor ausgebildet sein. Ein geblechter Rotor ist in axialer Richtung geschichtet ausgebildet. Der axiale Magnetfluss muss dabei die Kleber- bzw. Isolationsschichten zwischen den gestapelten einzelnen Elektroblechen überwinden, wodurch der Magnetkreis eine Scherung (zusätzlicher Luftspalt) erfährt und an Effizienz verliert. Der Rotor einer Axialflussmaschine kann alternativ auch einen Rotorträger aufweisen, der entsprechend mit Magnetblechen und/oder SMC-Material und mit als Permanentmagneten ausgebildeten Magnetelementen bestückt ausgebildet ist.

Es ist vorgesehen, dass das Kühlkanalmodul mehrteilig ausgebildet ist und zumindest ein Kühlkanalelement zur Aufnahme des Kühlmittels und eine Grundplatte für die Montage umfasst, wobei das Kühlkanalelement auf der Grundplatte angeordnet ist und wobei die Grundplatte mit dem Kühlkanalelement an einer axial zum Rotorkörper benachbart angeordneten Gehäusewand angeordnet ist. Der Vorteil dieser Ausgestaltung liegt insbesondere in dem modularen Aufbau und der einfachen Montage begründet.

Vorteilhafte Ausgestaltungen der Erfindung sind in den abhängig formulierten Ansprüchen angegeben. Die abhängig formulierten Ansprüche können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Es kann gemäß einer weiteren bevorzugten Weiterentwicklung der Erfindung auch vorgesehen sein, dass das Kühlkanalelement als umfänglich nicht geschlossener Ring oder Bogen oder in Form eines Hufeisens oder eines U oder dergleichen ausgebildet ist und auf seiner der Grundplatte zugekehrten Seite an einem Ende eine Kühlmittelzufluss-Öffnung und am anderen Ende eine Kühlmittelabfluss-Öffnung aufweist, und dass die Grundplatte hiermit korrespondierende Kanalöffnungen aufweist. Hierdurch wird eine konstruktiv einfache und im Hinblick auf die Kühlung der Rotoren optimierte Kühleinrichtung geschaffen.

Des Weiteren kann es gemäß einer ebenfalls vorteilhaften Ausgestaltung der Erfindung vorgesehen sein, dass das Kühlkanalelement als abgeflachtes Ringelement ausgebildet ist, welches eine axiale Dicke aufweist, die kleiner bemessen ist als seine radiale Dicke. Die vorteilhafte Wirkung dieser Ausgestaltung ist darin begründet, dass hierdurch auf engem Bauraum eine optimierte Kühlfläche geschaffen werden kann. Mit Vorteil weist das Kühlkanalelement hierfür eine axiale Dicke auf, die maximal die Hälfte der radialen Dicke misst.

Des Weiteren kann die Erfindung auch dahingehend weiterentwickelt sein, dass die Grundplatte und/oder das Kühlelement derart ausgebildet ist/sind, dass der axiale Luftspalt zwischen Rotor und Kühlkanalmodul kleiner oder gleich 3 mm bemessen ist. Insbesondere misst der axiale Luftspalt zwischen Rotor und Kühlkanalmodul mindestens 1 mm und maximal 2 mm. Somit kann eine weiter verbesserte Kühlung der Axialflussmaschine mit Blick auf die Ableitung der im Dauerbetrieb maximal generierten Wärme erreicht werden.

In einer ebenfalls bevorzugten Ausgestaltungsvariante der Erfindung kann auch vorgesehen sein, dass das Kühlkanalmodul einteilig ausgebildet ist, was wiederum die Herstellung des Kühlkanalmoduls sowie deren Montage weiter erleichtert.

Bevorzugt weist das Kühlkanalmodul einen Vorratsraum zur Aufnahme des Kühlmittels auf, wobei das Kühlkanalmodul am Anfang des Vorratsraums eine Kühlmittelzufluss-Öffnung und am Ende des Vorratsraums eine Kühlmittelabfluss-Öffnung aufweist. Das Kühlkanalmodul ist dabei in einer Ausnehmung einer axial benachbart zu dem Rotorkörper der Axialflussmaschine angeordneten Gehäusewand angeordnet, sodass die Kühlmittelzufluss-Öffnung und die Kühlmittelabfluss-Öffnung innerhalb der Ausnehmung mit in der Ausnehmung ausgebildeten Öffnungen eines Kühlmittelzufluss-Kanals und eines Kühlmittelabfluss-Kanals korrespondieren. Mit Vorteil weist das Kühlkanalmodul umfänglich oder auf seiner dem Gehäuse zugekehrten Seite Positionierungsmittel auf, die mit korrespondierenden Positionierungsmitteln des Gehäuses bzw. der Ausnehmung zusammenwirken, derart, dass eine eindeutige Positionierung und Fixierung des Kühlmittelmoduls innerhalb der Ausnehmung gewährleistet ist. Der Vorteil, der sich hierdurch realisieren lässt, ist, insbesondere der in axialer Erstreckung reduzierte Bauraum der elektrischen Axialflussmaschine.

Schließlich kann die Erfindung auch in vorteilhafter Weise dahingehend ausgeführt sein, dass das Kühlkanalmodul an einen Flüssigkeits-Kühlkreislauf zur Kühlung weiterer Komponenten innerhalb eines Kraftfahrzeugs gekoppelt ist. Insbesondere ist das Kühlkanalmodul an einen Flüssigkeits-Kühlkreislauf zur Kühlung einer Brennkraftmaschine innerhalb eines Kraftfahrzeugs gekoppelt. Hierdurch kann der erforderliche Aufwand für eine Kühleinrichtung der Axialflussmaschine weiter verringert werden.

Mit Vorteil ist die Axialflussmaschine in H-Anordnung ausgebildet, mit einem ersten dreh- und verschiebefest auf der Rotorwelle angeordneten, scheibenförmig ausgebildeten Rotorkörper und mit einem zweiten dreh- und verschiebefest auf der Rotorwelle angeordneten, scheibenförmig ausgebildeten Rotorkörper sowie mit einem Stator der in der axialen Mitte zwischen den beiden Rotorkörpern angeordnet ist. Die Kühleinrichtung umfasst dabei ein erstes Kühlkanalmodul zur Aufnahme eines Kühlmittels, wobei das erste Kühlkanalmodul als separates Bauteil auf der dem Stator abgekehrten Seite axial unmittelbar benachbart zu dem ersten Rotorkörper anordenbar ausgebildet ist und umfasst ferner ein zweites Kühlkanalmodul zur Aufnahme eines Kühlmittels, wobei das zweite Kühlkanalmodul analog zum ersten Kühlkanalmodul als separates Bauteil auf der dem Stator abgekehrten Seite axial unmittelbar benachbart zu dem zweiten Rotorkörper anordenbar ausgebildet ist. Hierdurch kann eine im Hinblick auf die Kühleigenschaften der Rotorkörper weiter verbesserte Axialflussmaschine in H-Anordnung bereitgestellt werden.

Darüber hinaus wird die der Erfindung zugrundeliegende Aufgabe gelöst durch eine elektrisch antreibbare Achse eines Kraftfahrzeugs mit einer integrierten Axialflussmaschine, wie sie gemäß der Erfindung ausgebildet ist.

Die Erfindung sowie das technische Umfeld werden nachfolgend anhand der Figuren näher erläutert. Es ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können.

Es zeigen:
- Figur 1: eine erfindungsgemäße Axialflussmaschine, integriert in eine Achse eines Kraftfahrzeugs, in einem Teil-Axialschnitt in schematischer Darstellung,
- Figur 2: eine vergrößerte Darstellung eines Detail-Teilschnitts der Axialflussmaschine gemäß Figur 1, und
- Figur 3: ein zweiteilig ausgebildetes Kühlkanalmodul, oben in einer Explosionsdarstellung und unten in einer Perspektivansicht.

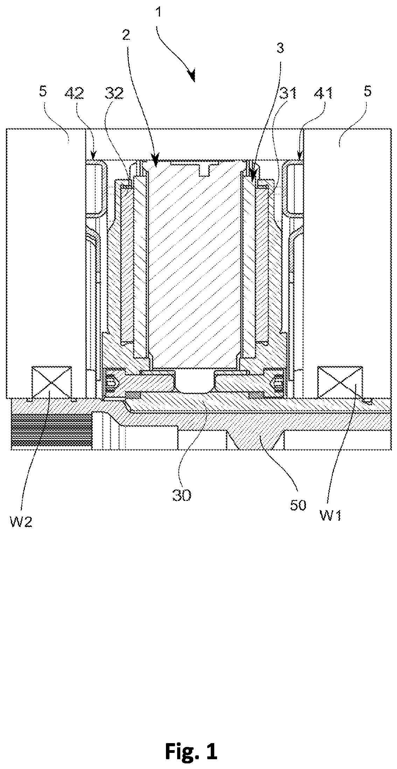

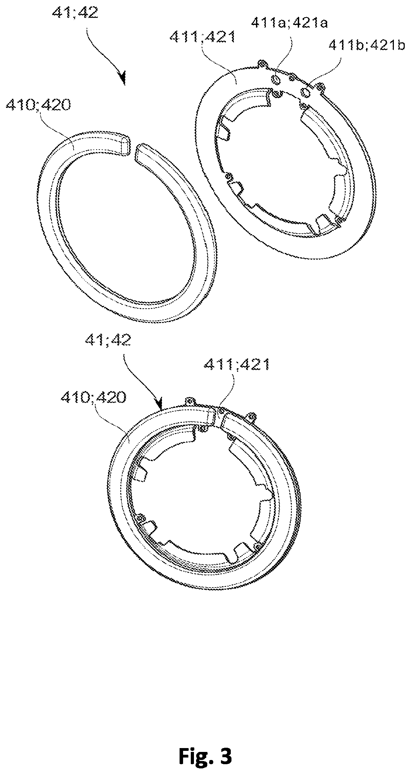

Figur 1 zeigt eine erfindungsgemäße Axialflussmaschine 1 in einem Teil-Axialschnitt in schematischer Darstellung. Die gezeigte elektrische Axialflussmaschine 1 umfasst einen axial mittig angeordneten Stator 2, einen Rotor 3 mit einer Rotorwelle 30 und mit einem ersten dreh- und verschiebefest auf der Rotorwelle 30 auf einer Seite axial benachbart zum Stator 2 angeordneten, scheibenförmig ausgebildeten Rotorkörper 31 sowie mit einem zweiten dreh- und verschiebefest auf der Rotorwelle 30 auf der axial gegenüberliegenden Seite des Stators 2 angeordneten, scheibenförmig ausgebildeten Rotorkörper 32. Die Rotorwelle 30 ist dabei als Hohlwelle ausgeführt, wobei innerhalb der Hohlwelle zumindest bereichsweise eine Abtriebswelle 50 hineinragt, welche über eine Verzahnung (Außenverzahnung der Abtriebswelle und korrespondierende Innenverzahnung der Rotorwelle 30) mit der Rotorwelle 30 zur Übertragung eines Drehmoments gekoppelt ist. Im dargestellten Beispiel ist auf der einen Seite die Rotorwelle 30 über ein Wälzlager W1 rotierbar in einer Gehäusewand 5 gelagert angeordnet und ist auf der gegenüberliegenden Axialseite die Abtriebswelle 50 über ein weiteres Wälzlager W2 in einer Gehäusewand 5 gelagert angeordnet. Ferner umfasst die dargestellte Axialflussmaschine 1 eine Kühleinrichtung 4 mit einem ersten Kühlkanalmodul 41 zur Aufnahme eines Kühlmittels und mit einem zweiten Kühlkanalmodul 42, wobei jedes Kühlkanalmodul 41, 42 als separates Bauteil jeweils auf der dem Stator 2 abgekehrten Seite axial unmittelbar benachbart zu dem jeweiligen Rotorkörper 31, 32 anordenbar ausgebildet ist. Bevorzugt ist das Kühlkanalmodul 41, 42 jeweils mehrteilig ausgebildet (siehe Figur 3, oben) und umfasst zumindest ein Kühlkanalelement 410, 420 zur Aufnahme des Kühlmittels und eine Grundplatte 411, 421. Dabei ist das Kühlkanalelement 410, 420 jeweils auf der ihm zugeordneten Grundplatte 411, 421 zum Zwecke der Montage an einer Gehäusewand 5 eines Gehäuses angeordnet, wobei die Grundplatte 411, 421 mit dem Kühlkanalelement 410 an einer axial zum Rotorkörper 31 benachbart angeordneten Gehäusewand 5 anordenbar ist.

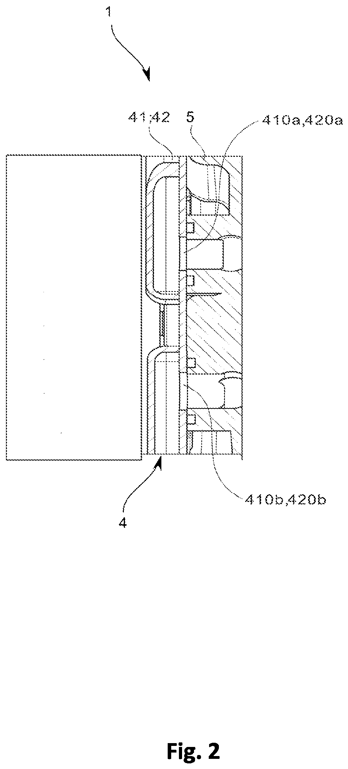

Figur 2 zeigt eine vergrößerte Darstellung eines Detail-Teilschnitts der Axialflussmaschine 12 gemäß Figur 1. In der gezeigten Darstellung der Figur 2 in Verbindung mit der Darstellung in Figur 3 ist gut zu erkennen, dass das Kühlkanalelement 410, 420 jeweils als umfänglich nicht geschlossener Ring ausgebildet ist und auf seiner der Grundplatte 411, 421 zugekehrten Seite an einem Ende eine Kühlmittelzufluss-Öffnung 410a, 420a und am anderen Ende eine Kühlmittelabfluss-Öffnung 410b, 420b aufweist, und dass die Grundplatte 411, 421 hiermit korrespondierende Kanalöffnungen 411a, 411b aufweist. Wie in den Figuren 2 und 3 dargestellt, ist das Kühlkanalelement 410 als abgeflachtes Ringelement ausgebildet ist, welches eine axiale Dicke aufweist, die kleiner bemessen ist als seine radiale Dicke.

Figur 3 zeigt das Kühlkanalmodul 41, 42 als eine zweiteilig ausgebildete Baugruppe, wobei die Baugruppe oben in einer Explosionsdarstellung und unten in einer Perspektivansicht dargestellt ist.

Die vorstehende Beschreibung ist als erläuternd anzusehen. Sofern die Patentansprüche und die vorstehende Beschreibung 'erste' und 'zweite' Merkmal definieren, so dient diese Bezeichnung der Unterscheidung zweier gleichartiger Merkmale, ohne eine Rangfolge festzulegen.

### Bezugszeichenliste

1 Axialflussmaschine
2 Stator
3 Rotor
30 Rotorwelle
31 erster Rotorkörper
32 zweiter Rotorkörper
4 Kühleinrichtung
41 erstes Kühlkanalmodul
410 Kühlkanalelement
410a Kühlmittelzufluss-Öffnung
410b Kühlmittelabfluss-Öffnung
411 Grundplatte
42 zweites Kühlkanalmodul
420 Kühlkanalelement
420a Kühlmittelzufluss-Öffnung
420b Kühlmittelabfluss-Öffnung
421 Grundplatte
W1 Wälzlager
W2 Wälzlager

## Patentansprüche

1. Elektrische Axialflussmaschine (1), umfassend
- einen Stator (2),
- einen Rotor (3) mit einer Rotorwelle (30) und mit zumindest einem ersten dreh- und verschiebefest auf der Rotorwelle (30) angeordneten, scheibenförmig ausgebildeten Rotorkörper (31), und
- eine Kühleinrichtung (4) zur Kühlung der Axialflussmaschine (1),
wobei
die Kühleinrichtung (4) ein erstes Kühlkanalmodul (41) zur Aufnahme eines Kühlmittels umfasst, wobei das Kühlkanalmodul (41) als separates Bauteil auf der dem Stator (2) abgekehrten Seite axial unmittelbar benachbart zu dem Rotorkörper (31) angeordnet ist,
**dadurch gekennzeichnet, dass**
das Kühlkanalmodul (41) mehrteilig ausgebildet ist und zumindest ein Kühlkanalelement (410) zur Aufnahme des Kühlmittels und eine Grundplatte (411) umfasst, wobei das Kühlkanalelement (410) auf der Grundplatte (411) angeordnet ist und wobei die Grundplatte (411) mit dem Kühlkanalelement (410) an einer axial zum Rotorkörper (31) benachbart angeordneten Gehäusewand (5) angeordnet sind.

2. Axialflussmaschine (1) nach Anspruch 1,
**dadurch gekennzeichnet, dass**
das Kühlkanalelement (410) als umfänglich nicht geschlossener Ring oder Bogen ausgebildet ist und auf seiner der Grundplatte (411) zugekehrten Seite an einem Ende eine Kühlmittelzufluss-Öffnung (410a) und am anderen Ende eine Kühlmittelabfluss-Öffnung (410b) aufweist, und dass die Grundplatte (411) hiermit korrespondierende Kanalöffnungen (411a, 411b) aufweist.

3. Axialflussmaschine (1) nach einem der vorstehenden Ansprüche,
**dadurch gekennzeichnet, dass**
das Kühlkanalelement (410) als abgeflachtes Ringelement ausgebildet ist, welches eine axiale Dicke aufweist, die kleiner bemessen ist als seine radiale Dicke.

4. Axialflussmaschine (1) nach Anspruch 3,
**dadurch gekennzeichnet, dass**
das Kühlkanalelement (410) eine axiale Dicke aufweist, die maximal die Hälfte der radialen Dicke misst.

5. Axialflussmaschine (1) nach einem der vorstehenden Ansprüche,
**dadurch gekennzeichnet, dass**
die Grundplatte (411) und/oder das Kühlelement (410) derart ausgebildet ist/sind, dass der axiale Luftspalt zwischen Rotor (3) und Kühlkanalmodul (41) kleiner oder gleich 3 mm bemessen ist, insbesondere dass der axiale Luftspalt zwischen Rotor (3) und Kühlkanalmodul (41) mindestens 1 mm und maximal 2 mm misst.

6. Axialflussmaschine (1) nach einem der vorstehenden Ansprüche 1 oder 3-5,
**dadurch gekennzeichnet, dass**
das Kühlkanalmodul (41) einteilig ausgebildet ist.

7. Axialflussmaschine (1) nach Anspruch 6,
**dadurch gekennzeichnet, dass**
das Kühlkanalmodul (41) einen Vorratsraum zur Aufnahme des Kühlmittels aufweist, wobei das Kühlkanalmodul (41) am Anfang des Vorratsraums eine Kühlmittelzufluss-Öffnung (410a) und am Ende des Vorratsraums eine Kühlmittelabfluss-Öffnung (410b) aufweist, und dass das Kühlkanalmodul (41) in einer Ausnehmung einer axial benachbart zu dem Rotorkörper (31) der Axialflussmaschine (1) angeordneten Gehäusewand angeordnet ist, sodass die Kühlmittelzufluss-Öffnung (410a) und die Kühlmittelabfluss-Öffnung (410b) innerhalb der Ausnehmung mit in der Ausnehmung ausgebildeten Öffnungen eines Kühlmittelzufluss-Kanals und eines Kühlmittelabfluss-Kanals korrespondieren.

8. Axialflussmaschine (1) nach Anspruch 7,
**dadurch gekennzeichnet, dass**
das Kühlkanalmodul (41) umfänglich oder auf seiner dem Gehäuse zugekehrten Seite Positionierungsmittel aufweist, die mit korrespondierenden Positionierungsmitteln des Gehäuses bzw. der Ausnehmung zusammenwirken, derart, dass eine eindeutige Positionierung des Kühlmittelmoduls (41) innerhalb der Ausnehmung gewährleistet ist.

9. Axialflussmaschine (1) nach einem der vorstehenden Ansprüche,
**dadurch gekennzeichnet, dass**
das Kühlkanalmodul (41) an einen Flüssigkeits-Kühlkreislauf zur Kühlung weiterer Komponenten innerhalb eines Kraftfahrzeugs gekoppelt ist, insbesondere an einen Flüssigkeits-Kühlkreislauf zur Kühlung einer Brennkraftmaschine innerhalb eines Kraftfahrzeugs gekoppelt ist.

10. Axialflussmaschine (1) nach einem der vorstehenden Ansprüche,
**dadurch gekennzeichnet, dass**
die Axialflussmaschine (1) in H-Anordnung ausgebildet ist mit einem ersten dreh- und verschiebefest auf der Rotorwelle (30) angeordneten, scheibenförmig ausgebildeten Rotorkörper (31) und mit einem zweiten dreh- und verschiebefest auf der Rotorwelle (30) angeordneten, scheibenförmig ausgebildeten Rotorkörper (32), wobei die Kühleinrichtung (4) ein erstes Kühlkanalmodul (41) zur Aufnahme eines Kühlmittels umfasst, wobei das erste Kühlkanalmodul (41) als separates Bauteil auf der dem Stator (2) abgekehrten Seite axial unmittelbar benachbart zu dem ersten Rotorkörper (31) anordenbar ausgebildet ist und wobei die Kühleinrichtung (4) ein zweites Kühlkanalmodul (42) zur Aufnahme eines Kühlmittels umfasst, wobei das zweite Kühlkanalmodul (42) als separates Bauteil auf der dem Stator (2) abgekehrten Seite axial unmittelbar benachbart zu dem zweiten Rotorkörper (31) anordenbar ausgebildet ist.

11. Elektrisch antreibbare Achse für ein Kraftfahrzeug,
umfassend
eine elektrische Axialflussmaschine (1) nach einem der vorstehenden Ansprüche.

## Claims

1. An electric axial flux machine (1), comprising
- a stator (2),
- a rotor (3) with a rotor shaft (30) and with at least a first disk-shaped formed rotor body (31) rotationally fixedly and non-displaceably arranged on the rotor shaft (30), and
- a cooling device (4) for cooling the axial flux machine (1),
whereby
the cooling device (4) includes a first cooling channel module (41) for accommodating a coolant, wherein the cooling channel module (41) is formed as a separate component capable of being arranged axially immediately adjacent to the rotor body (31) on the side facing away from the stator (2).
**characterized in that**
the cooling channel module (41) is multi-part formed and includes at least one cooling channel element (410) for accommodating the coolant and a base plate (411), wherein the cooling channel element (410) is arranged on the base plate (411) and wherein the base plate (411) with the cooling channel element (410) are arranged at a housing wall (5) arranged axially adjacent to the rotor body (31).

2. The axial flux machine (1) according to claim 1,
**characterized in that**
the cooling channel element (410) is formed as a circumferentially non-closed ring or arc and comprises a coolant inflow opening (410a) at an end and a coolant outflow opening (410b) at the other end on its side facing the base plate (411), and that the base plate (411) comprises channel openings (411a, 411b) corresponding herewith.

3. The axial flux machine (1) according to any one of the preceding claims,
**characterized in that**
the cooling channel element (410) is formed as a flattened ring element, which has an axial thickness, which is smaller dimensioned than its radial thickness.

4. The axial flux machine (1) according to claim 3,
**characterized in that**
the cooling channel element (410) has an axial thickness, which measures maximally half of the radial thickness.

5. The axial flux machine (1) according to any one of the preceding claims,
**characterized in that**
the base plate (411) and/or the cooling element (410) is/are formed such that the axial air gap between rotor (3) and cooling channel module (41) is dimensioned less than or equal to 3 mm, in particular that the axial air gap between rotor (3) and cooling channel module (41) measures at least 1 mm and at most 2 mm.

6. The axial flux machine (1) according to any one of the preceding claims 1 or 3-5,
**characterized in that**
the cooling channel module (41) is integrally formed.

7. The axial flux machine (1) according to claim 6,
**characterized in that**
the cooling channel module (41) comprises a reservoir for accommodating the coolant, wherein the cooling channel module (41) comprises a coolant inflow opening (410a) at the beginning of the reservoir and a coolant outflow opening (410b) at the end of the reservoir, and that the cooling channel module (41) is arranged in a recess of a housing wall arranged axially adjacent to the rotor body (31) of the axial flux machine (1), such that the coolant inflow opening (410a) and the coolant outflow opening (410b) within the recess correspond with openings of a coolant inflow channel and a coolant outflow channel formed in the recess.

8. The axial flux machine (1) according to claim 7,
**characterized in that**
the cooling channel module (41) comprises positioning means on the circumference or on its side facing the housing, which cooperate with corresponding positioning means of the housing or of the recess, such that a unique positioning of the coolant module (41) within the recess is ensured.

9. The axial flux machine (1) according to any one of the preceding claims,
**characterized in that**
the cooling channel module (41) is coupled to a liquid cooling circuit for cooling further components within a motor vehicle, in particular coupled to a liquid cooling circuit for cooling an internal combustion engine within a motor vehicle.

10. The axial flux machine (1) according to any one of the preceding claims,
**characterized in that**
the axial flux machine (1) is formed in H arrangement with a first disk-shaped formed rotor body (31) rotationally fixedly and non-displaceably arranged on the rotor shaft (30) and with a second disk-shaped formed rotor body (32) rotationally fixedly and non-displaceably arranged on the rotor shaft (30), wherein the cooling device (4) includes a first cooling channel module (41) for accommodating a coolant, wherein the first cooling channel module (41) is formed as a separate component capable of being arranged axially immediately adjacent to the first rotor body (31) on the side facing away from the stator (2), and wherein the cooling device (4) includes a second cooling channel module (42) for accommodating a coolant, wherein the second cooling channel module (42) is formed as a separate component capable of being arranged axially immediately adjacent to the second rotor body (31) on the side facing away from the stator (2).

11. An electrically drivable axle for a motor vehicle,
including
an electric axial flux machine (1) according to any one of the preceding claims.

## Revendications

1. Machine à flux axial électrique (1) comprenant :
- un stator (2),
- un rotor (3) avec un arbre de rotor (30) et au moins un premier corps de rotor (31) réalisé en forme de disque (31), agencé sur l'arbre de rotor (30) de manière fixe en rotation et non déplaçable, et
- un dispositif de refroidissement (4) pour refroidir la machine à flux axial (1), le dispositif de refroidissement (4) comprenant un premier module de canal de refroidissement (41) pour recevoir un liquide de refroidissement, le module de canal de refroidissement (41) étant agencé comme un élément séparé du côté opposé au stator (2) de manière axialement directement adjacente au corps de rotor (31),
**caractérisée en ce que**
le module de canal de refroidissement (41) est réalisé en plusieurs parties et comprend au moins un élément de canal de refroidissement (410) destiné à recevoir le liquide de refroidissement et une plaque de base (411), l'élément de canal de refroidissement (410) étant agencé sur la plaque de base (411) et la plaque de base (411) étant agencée avec l'élément de canal de refroidissement (410) sur une paroi de boîtier (5) agencée de manière axialement adjacente au corps de rotor (31).

2. Machine à flux axial (1) selon la revendication 1,
**caractérisée en ce que**
l'élément de canal de refroidissement (410) est réalisé sous la forme d'un anneau ou d'un arc non fermé sur la circonférence et comporte à une extrémité, sur son côté opposé à la plaque de base (411), une ouverture d'écoulement d'entrée de liquide de refroidissement (410a) et à l'autre extrémité, une ouverture d'écoulement de sortie de liquide de refroidissement (410b), et **en ce que** la plaque de base (411) comporte des ouvertures de canal (411a, 411b) correspondantes.

3. Machine à flux axial (1) selon l'une des revendications précédentes,
**caractérisée en ce que**
l'élément de canal de refroidissement (410) est réalisé sous la forme d'un élément annulaire aplati qui a une épaisseur axiale plus petite que son épaisseur radiale.

4. Machine à flux axial (1) selon la revendication 3,
**caractérisée en ce que**
l'élément de canal de refroidissement (410) a une épaisseur axiale qui mesure au maximum la moitié de l'épaisseur radiale.

5. Machine à flux axial (1) selon l'une des revendications précédentes,
**caractérisée en ce que**
la plaque de base (411) et/ou l'élément de refroidissement (410) est formé de telle sorte que l'entrefer entre le rotor (3) et le module de canal de refroidissement (41) est mesuré inférieur ou égal à 3 mm, en particulier **en ce que** l'entrefer axial entre le rotor (3) et le module de canal de refroidissement (41) mesure au moins 1 mm et au maximum 2 mm.

6. Machine à flux axial (1) selon l'une des revendications 1 ou 3 à 5 précédentes,
**caractérisée en ce que**
le module de canal de refroidissement (41) est formé d'un seul tenant.

7. Machine à flux axial (1) selon la revendication 6,
**caractérisée en ce que**
le module de canal de refroidissement (41) comporte un espace de réserve destiné à recevoir le liquide de refroidissement, le module de canal de refroidissement (41) comportant une ouverture d'écoulement d'entrée de liquide de refroidissement (410a) au début de l'espace de réserve et une ouverture d'écoulement de sortie de liquide de refroidissement (410b) à la fin de l'espace de réserve, et **en ce que** le module de canal de refroidissement (41) est agencé dans un évidement d'une paroi de boîtier agencée de manière axialement adjacente au corps de rotor (31) de la machine à flux axial (1), de telle sorte que l'ouverture d'écoulement d'entrée de liquide de refroidissement (410a) et l'ouverture d'écoulement de sortie de liquide de refroidissement (410b) à l'intérieur de l'évidement correspondent à des ouvertures réalisées dans l'évidement d'un canal d'écoulement d'entrée de liquide de refroidissement et d'un canal d'écoulement de sortie de liquide de refroidissement.

8. Machine à flux axial (1) selon la revendication 7,
**caractérisée en ce que**
le module de canal de refroidissement (41) comporte des moyens de positionnement sur la circonférence ou sur son côté dirigé vers le boîtier, qui coopèrent avec des moyens de positionnement correspondants du boîtier ou de l'évidement, de telle sorte qu'un positionnement unique du module de liquide de refroidissement (41) est assuré à l'intérieur de l'évidement.

9. Machine à flux axial (1) selon l'une des revendications précédentes,
**caractérisée en ce que**
le module de canal de refroidissement (41) est couplé à un circuit de refroidissement de liquide destiné à refroidir d'autres composants à l'intérieur d'un véhicule à moteur, en particulier à un circuit de refroidissement de liquide destiné à refroidir un moteur à combustion interne à l'intérieur d'un véhicule à moteur.

10. Machine à flux axial (1) selon l'une des revendications précédentes,
**caractérisée en ce que**
la machine à flux axial (1) est formée selon un agencement en H avec un premier corps de rotor (31) réalisé en forme de disque, agencé de manière fixe en rotation et non déplaçable sur l'arbre de rotor (30), et avec un second corps de rotor (32) réalisé en forme de disque, agencé de manière fixe en rotation et non déplaçable sur l'arbre de rotor (30), le dispositif de refroidissement (4) comprenant un premier module de canal de refroidissement (41) destiné à recevoir un liquide de refroidissement, le premier module de canal de refroidissement (41) étant conçu de façon à pouvoir être agencé comme un composant séparé du côté opposé au stator (2), de manière axialement directement adjacente au premier corps de rotor (31), et le dispositif de refroidissement (4) comprenant un second module de canal de refroidissement (42) destiné à recevoir un liquide de refroidissement, le second module de canal de refroidissement (42) étant formé de façon à pouvoir être agencé comme un composant séparé sur le côté opposé au stator (2), de manière axialement directement adjacente au second corps de rotor (31).

11. Essieu pouvant être entraîné électriquement pour un véhicule à moteur, comprenant une machine à flux axial électrique (1) selon l'une des revendications précédentes.
